# FASCICULE DE BREVET EUROPEEN

(11) **EP 0 558 391 B1**
(45) Date de publication et mention de la délivrance du brevet: **20.12.1995**
(21) Numéro de dépôt: 93400445.8
(22) Date de dépôt: 22.02.1993
(51) Int. Cl.: H01G 13/06, B23K 26/00

(54) **Procédé de fabrication de condensateurs feuilletés, et condensateur issu d'un tel procédé**
Herstellungsverfahren von Stapelkondensatoren und auf diese Weise hergestellter Kondensator
Method of manufacturing stacked capacitors and capacitor made by this method

(30) Priorité: 25.02.1992 FR 9202150
(43) Date de publication de la demande: 01.09.1993
(73) Titulaire: COMPAGNIE EUROPEENNE DE COMPOSANTS ELECTRONIQUES LCC, F-92400 Courbevoie (FR)
(72) Inventeur: Chapas, Nicolas, F-92402 Courbevoie Cedex (FR); Mysson, Philippe, F-92402 Courbevoie Cedex (FR); Stephan, Ronan, F-92402 Courbevoie Cedex (FR)
(74) Mandataire: Guérin, Michel

(56) Documents cités:
- EP-A- 0 200 089
- DE-A- 3 300 041
- GB-A- 2 143 087

## Description

La présente invention concerne un procédé de fabrication de condensateur feuilleté réalisé par empilements de films plastiques métallisés.

L'une des étapes du procédé consiste à enrouler sur une roue de grand diamètre au moins une paire de films plastiques métallisés. Chaque film plastique métallisé se présente sous la forme d'un ruban issu de la découpe d'un laize de film plastique métallisé de grande largeur. Lors de cette phase d'enroulement, une marge latérale non métallisée est réalisée sur chacun des deux films de la paire. Les marges latérales non métallisées sont réalisées sur des côtés opposés afin d'obtenir une paire de films constituée d'un film de rang pair et d'un film de rang impair.

On obtient ainsi un ruban capacitif comportant des couches de rang pair et impair alternées, appelé condensateur-mère. On recouvre ensuite avec un métal ou un alliage chacun des flancs du ruban capacitif afin de réaliser des armatures de sortie. Chaque armature de sortie permet de relier mécaniquement et électriquement entre elles les métallisations des couches de même rang. Cette opération, réalisée par projection de métal en fusion, est connue sous la dénomination de shoopage. Afin d'améliorer l'accrochage mécanique des gouttes de métal en fusion sur les films de même rang il est recommandé de décaler les films de rang pair par rapport aux films de rang impair.

Le ruban capacitif est alors découpé en blocs élémentaires. Chaque bloc constitue un condensateur feuilleté de forme généralement parallélépipèdique comprenant six faces : deux faces constituant les armatures, deux faces de découpe et deux faces perpendiculaires à la fois aux armatures et aux faces de découpe. Afin de protéger les deux faces perpendiculaires aux armatures et aux faces de découpe, plusieurs solutions sont connues de l'homme de l'art. L'une d'entre elles consiste à réaliser des tours de finition au début et à la fin de la phase d'enroulement. Les films sont démétallisés localement de façon que leur enroulement ne présente aucun effet capacitif sur le composant final.

Selon l'art antérieur, il est connu de démétalliser par effet thermique les films plastiques métallisés entrant dans la fabrication de condensateurs à l'aide d'un faisceau laser (cf. brevet GB - A - 2 143 084).

Le laser à impulsions qui sert à réaliser les marges non métallisées, dont la largeur et le positionnement permettent de définir la capacité du condensateur, est généralement aussi utilisé pour la démétallisation locale effectuée lors de la réalisation des tours de finition.

Selon l'art antérieur, ce laser agit par effet de pointes thermique. Selon que l'on désire réaliser les marges non métallisées ou ladite démétallisation locale, il est alors nécessaire de modifier le réglage du laser.

En effet, la démétallisation locale est réalisée au début et à la fin de la phase d'enroulement, c'est-à-dire avec une vitesse d'enroulement des films plastiques métallisés inférieure à la vitesse de régime établi. Ainsi, sans diminution soit de la fréquence, soit de la largeur des impulsions émises par le laser, soit de l'énergie transmise, il y a détérioration et brûlure des films plastiques.

Cette modification des paramètres de réglage du laser conduit à interrompre son fonctionnement à deux reprises, une première fois en début d'enroulement et une deuxième fois en fin d'enroulement.

Le procède de fabrication se trouve alourdi par ces différentes manipulations.

D'autre part, le faisceau laser, agissant de manière significative par effet thermique, provoque, dans tous les cas, un échauffement des films plastiques. Cet échauffement conduit à une détérioration locale de la rigidité diélectrique ainsi que de la tenue en tension du condensateur. Il peut aussi être source de déformation des films et donc induire des problèmes de bobinage.

Un autre inconvénient du procédé de démétallisation utilisant l'effet thermique selon l'art antérieur est la présence persistante de métallisations résiduelles résultant principalement de refusion dans les zones supposées avoir été démétallisées.

L'invention ne présente pas ces inconvénients. La présente invention a pour objet un procédé de fabrication de condensateurs feuilletés, ledit procédé comportant une étape d'enroulement d'au moins une paire de films plastiques métallisés, ladite étape étant séparée en trois phases, une première phase destinée à réaliser des tours de finition et durant laquelle les films sont démétallisés de façon que leur superposition n'induisent aucune capacité au niveau du composant final, une deuxième phase destinée à superposer les films de façon qu'ils contribuent à la capacité du composant final et durant laquelle les films sont démétallisés sous forme de marges, et une troisième phase destinée à réaliser des tours de finition dans les mêmes conditions que lors de la première phase, caractérisé en ce que les démétallisations des films intervenant dans les phases successives sont réalisées par décapage à l'aide d'un faisceau laser en forme des impulsions de courte durée.

Un avantage de l'invention est donc de simplifier le procédé de fabrication des condensateurs feuilletés.

D'autres caractéristiques et avantages de l'invention apparaîtront à la lecture d'un mode de réalisation préférentiel fait avec référence aux figures ci-annexées dans lesquelles :
- la figure 1 représente la vue en coupe d'un condensateur feuilleté dont l'empilement de feuilles de films plastiques métallisées qui définit sa capacité est encadré par deux empilements ne présentant aucun effet capacitif ;
- la figure 2 représente l'opération de réalisation des marges non métallisées sur une paire de films plastiques métallisés lors de l'étape d'enroulement des films, selon le mode de réalisation préférentiel de l'invention.
- la figure 3 représente l'opération de démétallisation locale réalisée lors de la réalisation des tours de finition en début et en fin de l'étape d'enroulement, selon le mode de réalisation préférentiel de l'invention.
- la figure 4 représente la vue en coupe d'un dispositif permettant de démétalliser les films selon un autre mode de réalisation de l'invention.
- la figure 5 représente l'opération de démétallisation de deux films plastiques métallisés lors de l'étape d'enroulement des films à l'aide du dispositif décrit en figure 4.

Sur toutes les figures les mêmes repères désignent les mêmes éléments.

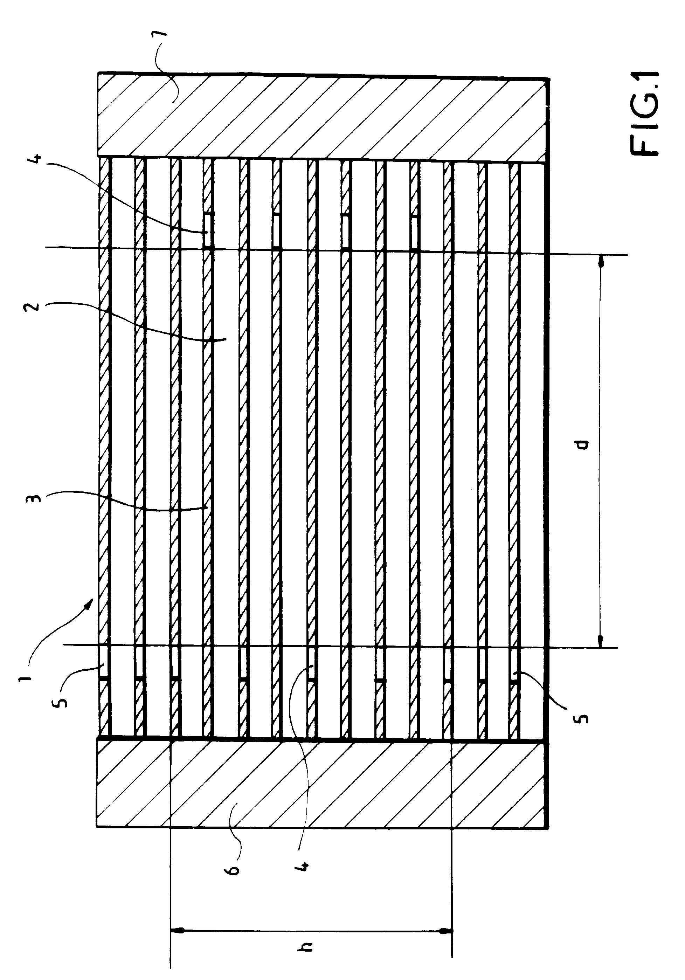

La figure 1 représente la vue en coupe d'un condensateur feuilleté dont l'empilement de feuilles de films plastiques métallisés qui définit sa capacité est encadré par deux empilements ne présentant aucun effet capacitif.

Le condensateur 1 est constitué d'un empilement de films plastiques métallisés. Sur la hauteur h de l'empilement, chaque film plastique est constitué d'un support diélectrique 2 sur lequel est déposée une métallisation 3. Une marge latérale non métallisée 4 sépare la métallisation 3 en deux zones électriquement isolées l'une de l'autre. Une zone est reliée à l'armature 6 et l'autre à l'armature 7. Les marges latérales non métallisées 4 sont situées alternativement au voisinage de chaque armature contribuant ainsi à définir la capacité du condensateur sur la distance d.

De part et d'autre de l'empilement de hauteur h sont situés deux empilements de films plastiques métallisés ne présentant aucun effet capacitif sur le composant final. De même que précédemment chaque film plastique est constitué d'un support diélectrique 2 sur lequel est déposée une métallisation 3. Une zone latérale non métallisée 5 sépare la métallisation 3 de ces films en deux zones électriquement isolées l'une de l'autre.

Les zones non métallisées 5 sont situées les unes sur les autres et ainsi ne permettent pas aux empilements de contribuer à la capacité du condensateur. Selon le mode de réalisation préférentiel, les zones non métallisées 5 sont latérales. Toute autre position située entre les deux armatures 6 et 7 est, bien sûr, possible. Le support diélectrique 2 est un film en polyester, polycarbonate, polysulfone, polypropylène ou similaires, et la métallisation 3 est réalisée à l'aide d'un métal choisi parmi l'aluminium, le zinc, les alliages contenant de l'aluminium, du zinc, du chrome ou similaires.

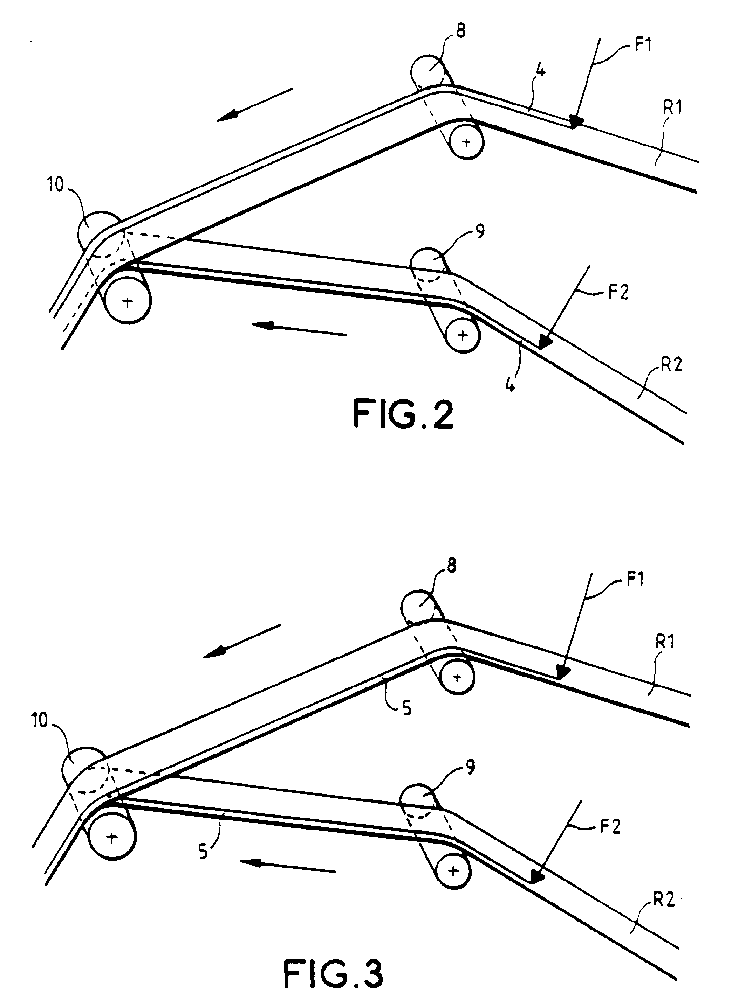

La figure 2 représente l'opération de réalisation des marges non métallisées sur une paire de films plastiques métallisés lors de l'étage d'enroulement des films, selon le mode réalisation préférentiel de l'invention.

Un premier film plastique métallisé, découpé sous forme de ruban R1, est superposé à un deuxième film plastique métallisé, découpé sous forme de ruban R2, à l'aide du système de rouleaux 8, 9, 10.

Un faisceaux laser F1, issu d'un dispositif laser non représenté sur la figure, réalise une marge latérale 4 sur le ruban R1 pendant qu'un faisceau laser F2, issu du même dispositif laser, réalise une marge latérale 4 sur le ruban R2.

Tout type de dispositif connu de l'homme de l'art et permettant de générer deux faisceaux laser différents F1 et F2 à partir d'un même dispositif laser peut être utilisé selon l'invention. Il est possible, par exemple, d'utiliser un dispositif à deux miroirs dont l'un des deux est semi-réfléchissant. Selon l'invention le laser utilisé travaille avec des impulsions de courte durée (typiquement 15 nano-secondes pour une épaisseur de métallisation de l'ordre de 50 à 100 nm). La démétallisation s'effectue alors par onde de choc. L'apport d'énergie pendant un temps très court ne permet pas à la matière de se dilater. Il en résulte une brusque montée en pression de la matière. L'effet de cette onde de choc sur le matériau provoque l'écaillage puis l'éjection de la couche superficielle et donc le décapage du substrat.

La figure 3 représente l'opération de démétallisation locale destinée à réaliser les tours de finition au début et à la fin de l'étape d'enroulement, selon le mode de réalisation préférentiel de l'invention.

L'opération destinée à réaliser les zones de démétallisation locale 5 sur les rubans de films plastiques R1 et R2 utilise les mêmes éléments que l'opération décrite précédemment.

La seule différence se traduit dans la nécessité qu'il y a à superposer les zones démétallisées des deux films plastiques. Ainsi, par exemple, le faisceau laser F2 est-il déplacé de façon à réaliser cette condition de superposition.

L'effet de décapage appliqué, selon l'invention, à la démétallisation de films plastiques métallisés permet de réaliser des marges plus fines que dans l'art antérieur. On peut ainsi atteindre des marges de l'ordre de 3/100 de millimètres avec une précision de l'ordre de quelques microns. C'est un avantage de l'invention que de contribuer à la miniaturisation des composants.

L'effet de décapage peut aussi s'obtenir à l'aide d'un faisceau d'électrons. On utilise alors un réseau de cathodes à micro-pointes à effet de champ comprenant un grand nombre de pointes de dimensions voisines du micron.

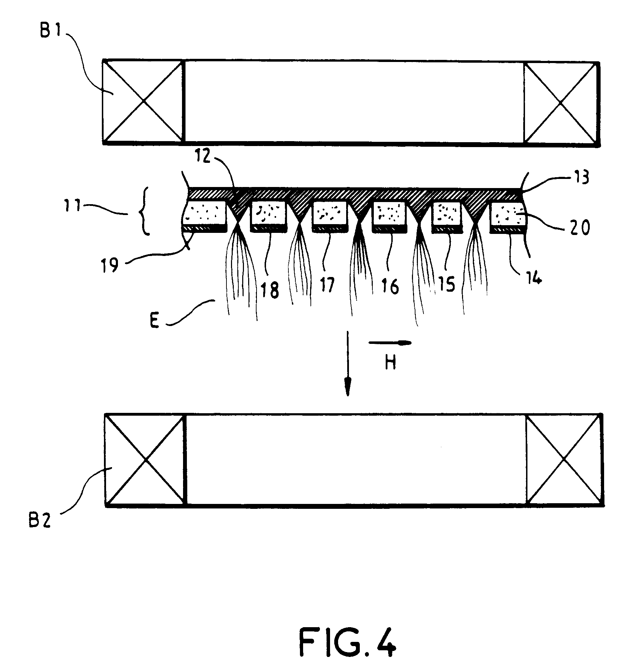

La figure 4 représente la vue en coupe d'un dispositif permettant de démétalliser les films selon un mode réalisation utilisant un faisceau d'électrons. Un fragment de cathode à micro-pointes 11 est représenté, en coupe, sur la figure 4.

Toutes les micro-pointes 12 sont disposées sur la même cathode 13. Une anode, représentée sur la figure 4 par les métallisations 14, 15, 16, 17, 18, et 19, est placée sur un diélectrique 20 parallèlement à cette cathode. Bien que cela n'apparaisse pas sur cette figure, les métallisations 14, 15, 16, 17, 18 et 19 sont toutes reliées entre elles.

Une différence de potentiel de l'ordre de 10 kilovolts est appliquée continûment entre la cathode et l'anode de façon à placer les électrons à extraire de la cathode dans des niveaux d'énergie favorables à cette extraction. Il suffit alors d'appliquer une différence de potentiel supplémentaire de l'ordre de 70 volts entre cathode et anode pour qu'il y ait émission d'électrons. L'émission d'électrons est de préférence discontinue. Ainsi la différence de potentiel supplémentaire est-elle appliquée sous forme d'impulsions.

Les électrons ainsi émis sont accélérés par le champ magnétique H créé par les bobines B1 et B2 de façon à constituer un faisceau E.

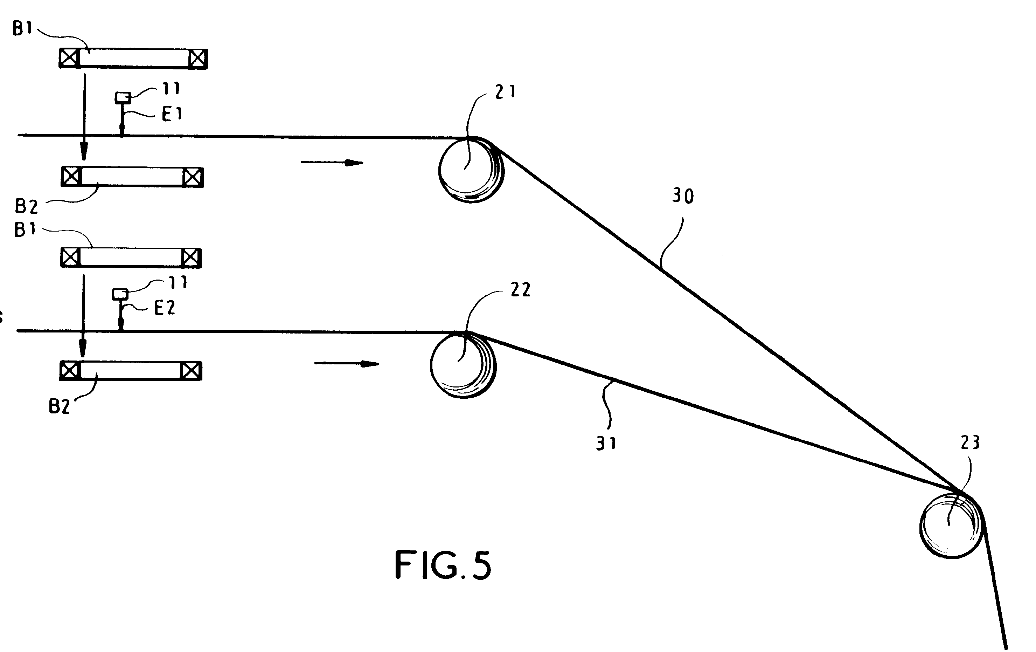

La figure 5 représente l'opération de démétallisation de deux films plastiques métallisés lors de l'étape d'enroulement des films à l'aide du dispositif décrit en figure 4.

Un premier film plastique métallisé 30 est superposé à un deuxième film plastique métallisé 31 à l'aide du système de rouleaux 21, 22, 23.

Un faisceau d'électrons E1, issu d'un dispositif tel que celui décrit en figure 4, est envoyé sur le film 30 pendant qu'un faisceau d'électrons E2, issu d'un dispositif identique au précédent, est envoyé sur le film 31.

D'un point de vue mécanique, le décapage est optimal quand le faisceau d'électrons est envoyé sur les films du côté du diélectrique et provoque le décollement et l'écaillement de la couche métallique par transparence.

Le décapage par faisceau d'électrons s'applique dans les mêmes conditions que le décapage par faisceau laser. Il permet donc de réaliser les marges non métallisées permettant de définir la valeur de la capacité et les démétallisations des tours de finition.

D'autre part, le décapage par faisceau d'électrons présente les mêmes avantages que le décapage par faisceau laser quant à la définition des marges obtenues, avec une précision de tout de l'ordre du micron.

De façon plus générale, la démétallisation par décapage peut être effectuée pour démétalliser les films plastiques quelle que soit l'étape durant laquelle cette démétallisation doit se produire.

Ainsi, par exemple, les films plastiques peuvent-ils être démétallisés par le procédé selon l'invention avant la découpe des laizes de grande largeur en rubans élémentaires.

## Revendications

1. Procédé de fabrication de condensateurs feuilletés (1), comportant une étape d'enroulement d'au moins une paire de films plastiques métallisés (R1, R2), ladite étape étant séparée en trois phases, une première phase destinée à réaliser des tours de finition et durant laquelle les films sont démétallisés de façon que leur superposition n'induise aucune capacité au niveau du composant final, une deuxième phase destinée à superposer les films de façon qu'ils contribuent à la capacité du composant final et durant laquelle les films sont démétallisés sous forme de marges (4), et une troisième phase destinée à réaliser des tours de finition dans les mêmes conditions que lors de la première phase, caractérisé en ce que les démétallisations (4, 5) des films intervenant dans les phases successives sont réalisées par décapage à l'aide d'un faisceau laser (F1) en forme des impulsions de courte durée.

2. Procédé selon la revendication 1, caractérisé en ce que le réglage du laser est identique pour chacune des trois phases de l'étape d'enroulement et que ledit laser fonctionne sans interruption.

3. Procédé de fabrication de condensateurs feuilletés (1), comportant une étape d'enroulement d'au moins une paire de films plastiques métallisés (R1, R2), ladite étape étant séparée en trois phases, une première phase destinée à réaliser des tours de finition et durant laquelle les films sont démétallisés de façon que leur superposition n'induise aucune capacité au niveau du composant final, une deuxième phase destinée à superposer les films de façon qu'ils contribuent à la capacité du composant final et durant laquelle les films sont démétallisés sous forme de marges (4), et une troisième phase destinée à réaliser des tours de finition dans les mêmes conditions que lors de la première phase, caractérisé en ce que les démétallisations (4, 5) des films intervenant dans les phases successives sont réalisées par décapage à l'aide d'au moins deux réseaux de cathodes à micro-pointes (11).

4. Procédé selon l'une quelconque des revendications 1 à 3, caractérisé en ce que, lors des première et troisième phases, les films sont enroulés de façon à superposer les zones démétallisées par décapage.

5. Procédé de fabrication de condensateurs feuilletées comportant au moins une étape de démétallisation de films plastiques métallisés se présentant sous forme de laizes de grande largeur destinés à être découpés en rubans élémentaires, caractérisé en ce que la démétallisation est réalisée par décapage à l'aide d'au moins un réseau de cathodes à micro-pointes.

## Patentansprüche

1. Verfahren zum Herstellen von geschichteten Kondensatoren (1) enthaltend eine Stufe, bei der wenigstens ein Paar metallisierter Kunststoffolien (R1, R2) aufgewickelt wird, wobei die Stufe in drei Phasen unterteilt ist, von denen eine erste Phase dazu bestimmt ist, die Endwindungen herzustellen, und in deren Verlauf die Folien so entmetallisiert werden, daß ihre Übereinanderlagerung keine Kapazität beim fertigen Bauelement herbeiführt, eine zweite Phase dazu bestimmt ist, die Folien so übereinander zu lagern, daß sie zur Kapazität des fertigen Bauelements beitragen, und in deren Verlauf die Folien in Form von Bereichen (4) entmetallisiert werden, und eine dritte Phase dazu bestimmt ist, die Endwindungen unter den gleichen Bedingungen wie im Verlauf der ersten Phase herzustellen, dadurch gekennzeichnet, daß die Entmetallisierungen (4, 5) der Folien, die in den aufeinanderfolgenden Phasen erfolgen, durch Abtragen mit Hilfe eines Laserstrahls (F1) in Form von Impulsen mit kurzer Dauer durchgeführt werden.

2. Verfahren nach Anspruch 1, dadurch gekennzeichnet, daß die Einstellung des Lasers für alle drei Phasen der Aufwickelstufe identisch ist und daß der Laser ohne Unterbrechung arbeitet.

3. Verfahren zum Herstellen von geschichteten Kondensatoren (1) enthaltend eine Stufe, bei der wenigstens ein Paar metallisierter Kunststoffolien (R1, R2) aufgewickelt wird, wobei die Stufe in drei Phasen unterteilt ist, von denen eine erste Phase dazu bestimmt ist, die Endwindungen herzustellen, und in deren Verlauf die Folien so entmetallisiert werden, daß ihre Übereinanderlagerung keine Kapazität beim fertigen Bauelement herbeiführt, eine zweite Phase dazu bestimmt ist, die Folien so übereinander zu lagern, daß sie zur Kapazität des fertigen Bauelements beitragen, und in deren Verlauf die Folien in Form von Bereichen (4) entmetallisiert werden, und eine dritte Phase dazu bestimmt ist, die Endwindungen unter den gleichen Bedingungen wie im Verlauf der ersten Phase hergestellten, dadurch gekennzeichnet, daß die Entmetallisierungen (4, 5) der Folien, die in den aufeinanderfolgenden Phasen erfolgen, mit Hilfe von wenigstens zwei Mikropunkt-Kathodengittern (11) erfolgen.

4. Verfahren nach einem der Ansprüche 1 bis 3, dadurch gekennzeichnet, daß bei der ersten und der dritten Phase die Folien so aufgewickelt werden, daß die durch Abtragen entmetallisierten Zonen übereinandergelegt werden.

5. Verfahren zum Herstellen geschichteter Kondensatoren mit wenigstens einer Stufe zur Entmetallisierung metallisierter Kunststoffolien, die in Form von Bahnen mit großer Breite vorliegen, die dazu bestimmt sind, in Grundbänder zerschnitten zu werden, dadurch gekennzeichnet, daß die Entmetallisierung durch Abtragen mit Hilfe wenigstens eines Mikropunkt-Kathodengitters durchgeführt wird.

## Claims

1. A method for the manufacture of foil capacitors (1), comprising a stage including the rolling up of at least one pair of metallized plastic foils (R1, R2), said stage being divided into three phases: a first phase adapted for producing the final turns and during which the foils are demetallized in such a manner that superposing the same does not contribute any capacitance in the finished component, a second stage adapted to superpose the foils in such a manner that same contribute to the capacitance of the finished component and during which the foils are demetallized at margins (4), and a third phase adapted to produce the final turns under the same conditions as in the first phase, characterized in that the demetallization (4, 5) of the foils employed in the successive phases is performed by skimming using a laser beam (F1) in the form of short duration pulses.

2. The method as claimed in claim 1, characterized in that regulation of the laser is identical for each of the three phases of the rolling stage and that the said laser functions without interruption.

3. A method for the manufacture of foil capacitors (1), comprising a stage including the rolling up of at least one pair of metallized plastic foils (R1, R2), said stage being divided into three phases: a first phase adapted for producing the final turns and during which the foils are demetallized in such a manner that superposing the same does not contribute any capacitance in the finished component, a second stage adapted to superpose the foils in such a manner that same contribute to the capacitance of the finished component and during which the foils are demetallized at margins (4), and a third phase adapted to produce the final turns under the same conditions as in the first phase, characterized in that the demetallization (4, 5) of the foils employed in the successive phases is performed by skimming using at least two micro-point cathode grids (11).

4. The method as claimed in any one of the claims 1 through 3, characterized in that during the first and third phases the foils are rolled up in such a manner as to superpose the zones demetallized by skimming.

5. A method for the manufacture of foil capacitors comprising at least one demetallization stage of metallized plastic foils present in the form of sheets with a large width adapted to be cut up into single tapes, characterized in that such demetallization is performed by skimming with the aid of at least one micro-point cathode grid.
